# EUROPEAN PATENT APPLICATION

(11) **EP 4 279 359 A1**
(43) Date of publication of application: **22.11.2023**
(21) Application number: 22739318.8
(22) Date of filing: 06.01.2022
(51) Int. Cl.: B62D 5/04, B62D 7/09

(54) **HUB UNIT WITH STEERING FUNCTION, STEERING SYSTEM, AND VEHICLE PROVIDED WITH SAME**

(30) Priority: 12.01.2021 JP 2021003069
(71) Applicant: NTN Corporation, Osaka-shi, Osaka 550-0003 (JP)
(72) Inventor: UTSUNOMIYA, Satoshi, Iwata-shi, Shizuoka 438-8510 (JP); OHATA, Yusuke, Iwata-shi, Shizuoka 438-8510 (JP)
(74) Representative: Maikowski & Ninnemann Patentanwälte Partnerschaft mbB
(86) International application number: PCT/JP2022/000151
(87) International publication number: WO 2022/153909

(57) **Abstract**

A hub unit (1) with a steering function includes: a hub bearing (8) that rotatably supports a wheel (10); a cylindrical turning shaft section (24) extending from an outer ring (22) thereabove and thereunder with the outer ring (22) being located at an outer peripheral surface of an outer race (12) of the hub bearing (8); a steering actuator (4) that causes the hub bearing (8) to rotate about an axis (AX) of the turning shaft section (24); a unit support member (6) that rotatably supports the hub bearing (8) about the axis (AX) on a vehicle body; and an arm section (28) projecting from the outer ring (22) rearward of a vehicle, with the actuator (4) being coupled to the arm section (28). The actuator (4) includes: an extensible and retractable assembly (42) capable of providing extension or retraction in a direction perpendicular to the axis (AX); and the extensible and retractable assembly (42) is coupled to the arm section (28) through a joint assembly (44) providing two or more directions of freedom.

## Description

### CROSS REFERENCE TO THE RELATED APPLICATION

This application is based on and claims Convention priority to Japanese patent application No. 2021-003069, filed January 12, 2021, the entire disclosure of which is herein incorporated by reference as a part of this application.

### BACKGROUND OF THE INVENTION

### (Field of the Invention)

The present invention relates to a hub unit with a steering function and a vehicle, which are furnished with a functionality to provide the steering of a wheel in accordance with left and right wheel independent steering.

### (Description of Related Art)

In a typical vehicle such as an automobile, a steering wheel is mechanically coupled to a steering assembly which, in turn, has an end, on each side thereof, connecting to a left or right wheel through a tie rod. Hence, the initial setup dictates the steering angle of the left or right wheel in response to the motion of the steering handle. Known vehicle geometries include: (i) a "parallel geometry" in which the steering angles for the left and right wheels are identical; and (ii) an "Ackerman geometry" in which the inside wheel is steered by a turning angle greater than that of the outside wheel in order to define a single turn center.

In an Ackerman geometry, the steering angle difference between the left and right wheels is selected such that both wheels make a turn about the single identical center, so as to facilitate smooth turn travel of the wheels during turning in a low-velocity regime where a centrifugal force acting on the vehicle is negligible. Yet, a parallel geometry is preferred over an Ackerman geometry during turning in a high-velocity regime where a centrifugal force is not negligible, because it is desired that a cornering force be generated by wheels in such a direction that balances out the centrifugal force.

In a typical vehicle, since a steering assembly is mechanically coupled to wheels as mentioned above, a single, fixed steering geometry can normally be taken. Hence, a geometry that is intermediate between an Ackerman geometry and a parallel geometry is often selected. However, this results in an insufficient difference in a steering angle between left and right wheels during a low-velocity regime, such that an excessive steering angle is created for the outside wheel. On the other hand, an excessive steering angle is created for the inside wheel during a high-velocity regime. Such an unwanted unevenness in the distribution of a lateral force among the inside and outside wheels can lead to a poor fuel economy caused by an increased running resistance, as well as premature wears of the wheels. Furthermore, the inefficient use of the inside and outside wheels leads to issues like loss of smoothness during cornering. To address the foregoing, a variety of systems have been proposed (e.g., Patent Documents 1 to 4).

### [Related Document]

### [Patent Document]

[Patent Document 1] JP Laid-open Patent Publication No. 2009-226972
[Patent Document 2] DE102012206337
[Patent Document 3] JP Laid-open Patent Publication No. 2014-061744
[Patent Document 4] JP Laid-open Patent Publication No. 2019-059385

### SUMMARY OF THE INVENTION

The systems in Patent Documents 1 to 3 are capable of effecting changes in a steering geometry but suffer from the following drawbacks:
The system in Patent Document 1 effects a change in a steering geometry through a change in the relative position between a knuckle arm and a joint. The provision, in this local region, of a motorized actuator that is capable of producing a power high enough to bring about such a change in the vehicle geometry poses a considerable challenge, given the spatial constraints. In addition, a change effected at this location leads to a limited shift in a wheel angle. To produce the same shift in a greater magnitude, a significant change, i.e., a significant displacement needs to take place.

The system in Patent Document 2 employs two motors. Commensurate with the increase in the number of motors is an increase in cost as well as complication in their control.

The system in Patent Document 3 can only be applied to a vehicle with four-wheel independent steering. Further, a hub bearing is supported in a cantilevered fashion on a turning shaft, thus resulting in a poor rigidity with the possibility of an extreme G-force altering a steering geometry if it ever occurs. Also, a more mechanical power will be required if a speed reducer is deployed on the turning axis. This is accomplished by an increase in the size of a motor, but it is difficult to arrange a large-sized motor in its entirety within the inner periphery of a wheel. When the deployed speed reducer has a large, speed reduction ratio, there will be a trade-off in responsiveness.

Such conventional mechanisms with a steering function are intended to be used to change the toe angle or camber angle of a wheel of a vehicle to a given desired level, which is one of the reasons they are complex in structure. Further, it is a challenging task to ensure their rigidity, and ensuring their rigidity necessitates an increase in their size and results in weight increase. Their components will be located at the back (i.e., a vehicle body-side) of a hub unit if the turning axis is to be coincident with a kingpin axis, and the outcome is an increase in their size as a whole, as well as weight increase.

To overcome such drawbacks, Patent Document 4 proposes a system, in the form of a hub unit, that can ensure an adequate rigidity in addition to being simple in its structure. The hub unit with a steering function in Patent Document 4 includes a steering actuator having a free end provided with an extensible and retractable assembly, which is coupled to an arm section extending from a turning shaft in a radial direction.

A free end of the extensible and retractable assembly of the steering actuator is coupled through a link member to a free end of the arm section. In particular, the coupling between the free end of the extensible and retractable assembly of the steering actuator and the link member is provided in the form of a pivotable coupling about an axis which is defined by a link pin and parallel to the turning axis, while the coupling between the link member and the free end of the arm section is provided in the form of a pivotable coupling about an axis which is defined by an additional link pin and parallel to the turning axis. This allows a difference in trajectory between the actuator-side linear motion and the arm-side arcuate motion to be absorbed and thereby promotes smooth turning of a hub bearing.

To promote smooth turning of the hub bearing in such a configuration, it was necessary for the two link pins to be inserted so as to be parallel to the turning axis with a high precision. Any mismatch in orientation between the two link pins and the turning axis can cause assembly troubles like the insertion failure of the link pins. Further, the link pins, if forcibly assembled in place, will create resistance to the turning of the hub bearing by impeding the smooth pivoting of the link member. This consequently introduced the risk that a substantial load could act on the internal components of the actuator.

To manage the parallelism between the link pins and the turning axis with a high precision, the precision of the holes into which the link pins are to be inserted as well as the precision with which the different components are assembled must all reach an extremely high level of quality, but this required huge cost and effort. Moreover, even if the individual precisions of the different components or precision with which they are assembled is/are improved, a perfectly parallel alignment between the link pins and the turning axis is difficult to attain. In reality, it is inevitable to provide a slight margin of gap for the fitting of the link pins and figure out a way to absorb a minute error in parallelism that still remained at the end.

However, such a gap for the fitting of a link pin adds more backlash in the turning direction, resulting in a delay or error in steering control as well as an inferior steering function. In addition, such a gap for the fitting of a link pin can cause backlash in a wheel in a mounted position even when the actuator is not activated. This leads to a wheel misalignment and has an adverse impact on the dynamics and stability of the vehicle. In light of the above, there is a need for a coupling structure with less backlash, which serves as a coupling between a free end of the actuator and a free end of the arm section, does not require a high machining accuracy, and absorbs a possible imprecision in the installation of the actuator.

An object of the present invention is to provide a hub unit with a steering function, which can absorb a possible imprecision in the installation of a steering actuator and thereby enables a hub bearing to be smoothly steered about a turning axis, and a steering system as well as a vehicle provided with the same.

The present invention provides a hub unit with a steering function, which includes: a hub bearing configured to rotatably support a wheel; an outer ring located at an outer peripheral surface of an outer race of the hub bearing; a cylindrical turning shaft section extending from an external side of the outer ring thereabove and thereunder; a steering actuator configured to cause the hub bearing to rotate about an axis of the turning shaft section; a unit support member configured to rotatably support the hub bearing about the axis of the turning shaft section on a vehicle body; and an arm section projecting from the outer ring frontward or rearward of a vehicle, with the steering actuator being coupled to the arm section. The steering actuator includes an extensible and retractable assembly capable of providing extension or retraction in a direction perpendicular to the axis of the turning shaft section. The extensible and retractable assembly is coupled to the arm section through a joint assembly providing two or more directions of freedom.

A hub unit with a steering mechanism according to the present invention, when used in conjunction with a front wheel, can be steered as a whole together with the orientation of the wheel via a steering assembly in response to the operation of a steering wheel by a driver, and also, can perform - in a supplementary manner to that steering - per-wheel, independent steering of the wheel in which the wheel is steered by a slight angle about the axis of the turning shaft section. Meanwhile, a hub unit with a steering mechanism according to the present invention, when used in conjunction with a rear wheel, is not steered as a whole, but can still perform per-wheel, independent steering of the wheel in which the wheel is steered by a slight angle through its own steering function as in the case of a front wheel. For example, in either case, the steering actuator is able to rotate the hub bearing as appropriate about the axis of the auxiliary turning shaft section and can thereby be used to change the toe angle of a wheel to a given desired level according to the travel conditions of the vehicle.

Further, during turning, the steering angle difference between left and right wheels can be changed as a function of a driving speed. For instance, a steering geometry change can be effected while driving, such as by selecting a parallel geometry during turning in a high-velocity regime and selecting an Ackerman geometry during turning in a low-velocity regime. By thus being able to change a wheel angle to a given desired level while driving, the dynamic performance and the stability of the vehicle are improved. In addition, the turn radius of the vehicle during turning can be shortened by appropriately making changes to the steering angles of the left and right wheels that are being steered, thereby providing enhanced, small-radius turning performance. Furthermore, driving stability can also be assured during a linear driving movement by making adjustments to a toe angle level as a function of relevant conditions, thus, with no deterioration in fuel economy.

To make the most of such a steering function, a steering magnitude must be controlled accurately and at a high response speed. For this, it is crucial to reduce backlash in the steering direction to the least possible level. Especially, the presence of backlash, if any, in the mechanical components that couple a free end of the extensible and retractable assembly of the actuator to a free end of the arm section results in a delay or error in steering control, and also, causes backlash in a wheel in a mounted position even when the actuator is not activated. This consequently amounts to a risk that a wheel may come out of alignment and make an adverse impact on the dynamics and stability of the vehicle.

Traditionally, the free end of the extensible and retractable assembly of the actuator was coupled to the free end of the arm section using two link structures parallel to a turning axis and a pivot axis. Accordingly, in order to absorb a possible imprecision in their parallelism, a gap had to be provided for the fitting of links, but this made backlash in the steering direction inevitable.

In the present invention, a free end of the extensible and retractable assembly of the actuator is coupled to a free end of the arm section through a joint providing two or more directions of freedom. While the conventional linkage only allowed pivoting in a single angular direction about an axis parallel to a steering axis, the above-presented configuration includes a coupling structure that is capable of additionally pivoting about an axis perpendicular to the turning shaft section to serve as a coupling between the free end of the extensible and retractable assembly of the actuator and the free end of the arm section. Thus, the free end of the extensible and retractable assembly of the actuator can be coupled to the free end of the arm section, without having to provide a widened gap in the coupling assembly in case that an imprecision occurs in the installation of the actuator about an axis perpendicular to the turning shaft section. As a result, it can be expected that backlash in the steering direction is kept to a low level, making the full potential of the steering function available.

The joint assembly in the hub unit with a steering function according to the present invention may include a plurality of joints arranged in series. In this context, the plurality of joints may include at least one ball joint or cross joint.

The present invention provides a steering system which includes: a hub unit with a steering function according to the present invention; a controller configured to receive a command signal from a superordinate control unit and output a motor current command signal; and a power supply unit configured to output a current as a function of the motor current command signal to drive the steering actuator.

The present invention provides a vehicle which includes left and right front wheels or left and right rear wheels, equipped with a hub unit with a steering mechanism according to the present invention or a steering system according to the present invention.

Any combinations of at least two features disclosed in the claims and/or the specification and/or the drawings should also be construed as encompassed by the present invention. Especially, any combinations of two or more of the claims should also be construed as encompassed by the present invention.

### BRIEF DESCRIPTION OF THE DRAWINGS

The present invention will be more clearly understood from the following description of preferred embodiments made by referring to the accompanying drawings. However, the embodiments and the drawings are given merely for the purpose of illustration and explanation, and should not be used to delimit the scope of the present invention, which scope is to be delimited by the appended claims. In the accompanying drawings, alike numerals are assigned to and indicate alike or corresponding parts throughout the several figures:
Fig. 1 shows a perspective view of a hub unit with a steering function, in accordance with a first embodiment of the present invention;
Fig. 2 shows a side view of the hub unit with a steering function, when seen from the outer side of a wheel;
Fig. 3 shows a top view of the hub unit with a steering function;
Fig. 4 shows a vertical cross sectional view of the hub unit with a steering function;
Fig. 5 shows a vertical cross sectional view of an undercarriage structure of a vehicle that includes the hub unit with a steering function;
Fig. 6 shows a cross sectional view of a coupling structure between a free end of an extensible and retractable assembly of an actuator and a free end of an arm section, of the hub unit with a steering function;
Fig. 7 shows a vertical cross sectional view of an undercarriage structure of a vehicle that includes a conventional hub unit with a steering function; and
Fig. 8 shows a cross sectional view of a coupling structure between a free end of an extensible and retractable assembly of an actuator and a free end of an arm section of the hub unit with a steering function.

### DESCRIPTION OF EMBODIMENTS

What follows is a description of preferred embodiments of the present invention made with reference to the drawings. The terms "right" and "left" herein refer to the "right" and "left" when seen from a driver seated in a vehicle that is installed with a hub unit with a steering function. Also, the terms "front" and "rear" refer to the "front" and "rear" in a direction of travel of the vehicle. Further, the terms "upper" and "lower" refer to the "upper" and "lower" in regard to a mounted position to the vehicle.

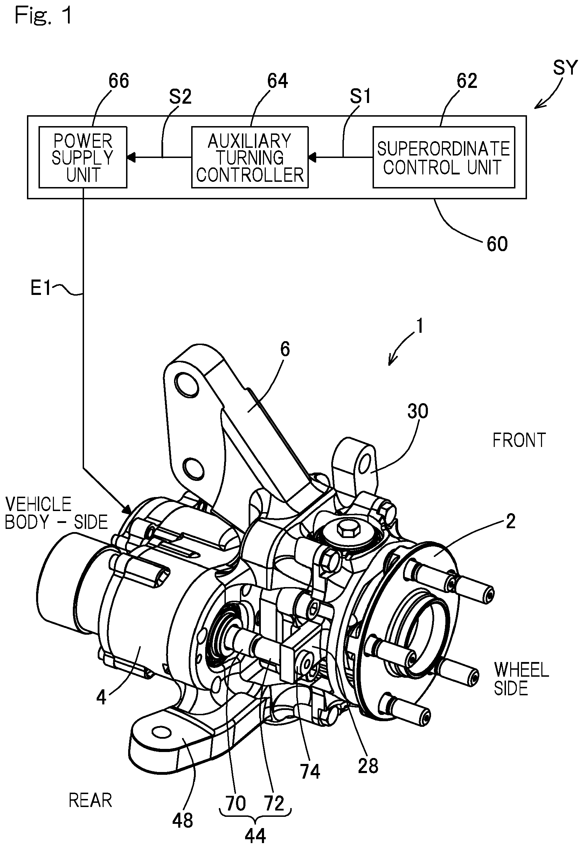

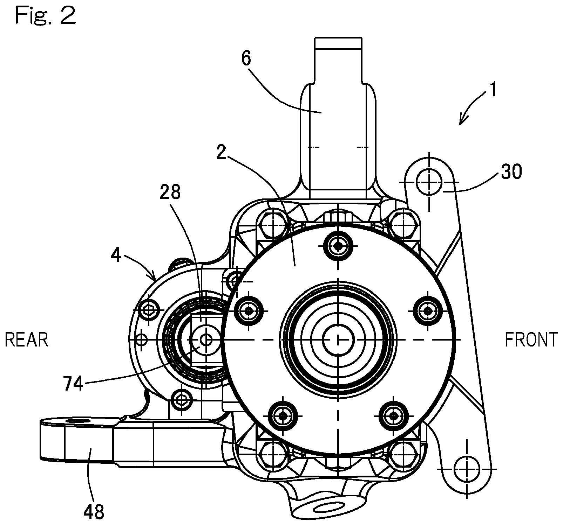

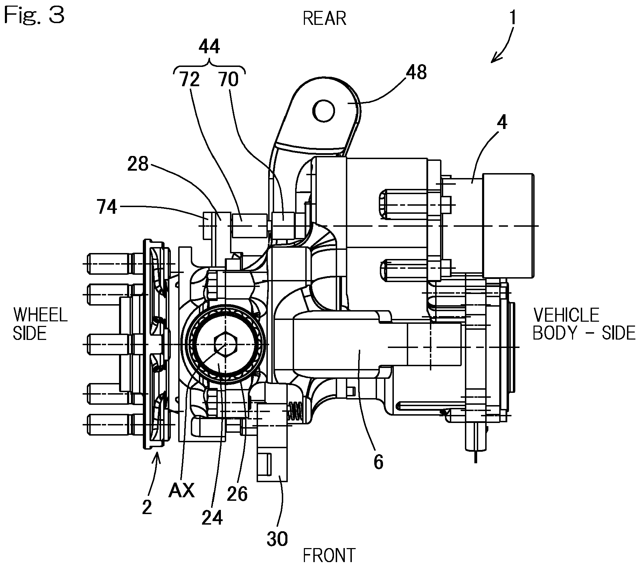

Fig. 1 shows a perspective view of a hub unit with a steering function, in accordance with a first embodiment of the present invention. Fig. 2 shows a side view as seen from a wheel side. Fig. 3 shows a top view as seen from above. The hub unit 1 with a steering function includes a hub bearing assembly 2, a steering actuator 4, and a unit support member 6. The unit support member 6 in the instant embodiment is formed in one piece with a knuckle which is one of the components of a suspension system. The unit support member 6 may be constructed as a distinct piece from and secured to the knuckle. This unit support member 6 provides support of the hub bearing assembly 2 and the steering actuator 4 relative to a vehicle body.

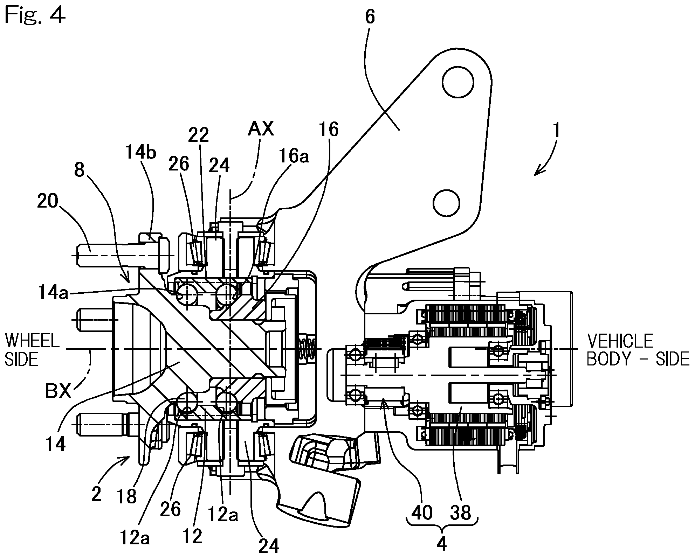

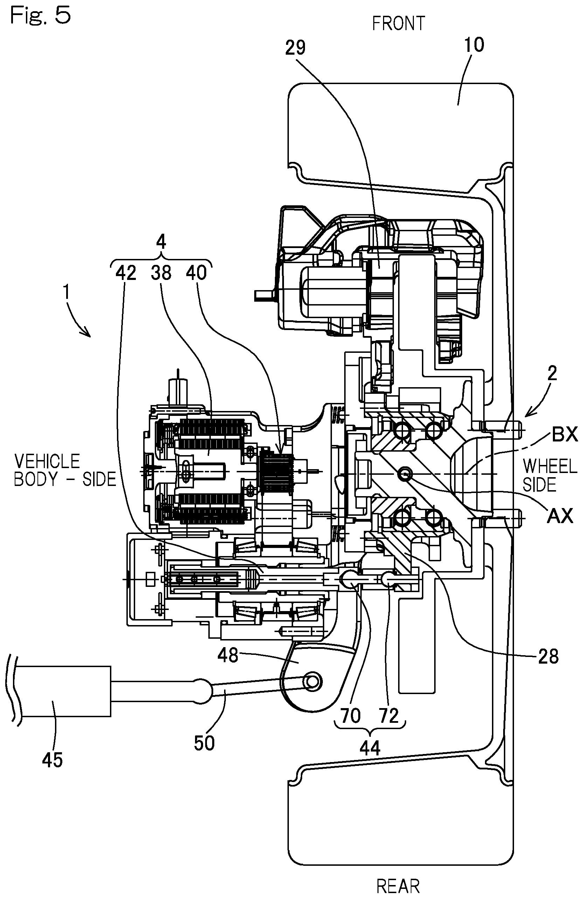

The hub bearing assembly 2 is to be located on a wheel side of the knuckle and includes a hub bearing 8 for rotatably supporting a wheel 10 (Fig. 5). As depicted in Fig. 4, the hub bearing 8 is a double-row rolling bearing which includes an outer race 12 having outer raceway surfaces 12a, 12a, a wheel hub 14 having one of inner raceway surfaces (i.e., a wheel-side inner raceway surface) 14a and defining an axle, an inner race 16 having the other of the inner raceway surfaces (i.e., a vehicle body-side inner raceway surface) 16a, and rolling elements 18 interposed between the outer raceway surfaces 12a, 12a and the inner raceway surfaces 14a, 16a. The rolling elements 18 are, for example, balls. The wheel hub 14 has a wheel mounting flange 14b to which the wheel 10 (Fig. 5) is to be mounted using fastener members 20 such as bolts.

The hub bearing assembly 2 further includes an annular outer ring 22 located at the outer peripheral surface of the outer race 12. The outer ring 22 in the instant embodiment is formed in one piece with the outer race 12. The outer ring 22 may be formed as a distinct piece from the outer race 12. The outer ring 22 has cylindrical turning shaft sections 24, 24 extending from the outer side of the outer ring 22 thereabove and thereunder, respectively. Each of the turning shaft sections 24, 24 in the instant embodiment has the shape of a circular cylinder. The two turning shaft sections 24, 24 are coaxially formed. That is, the two turning shaft sections 24, 24 have a common turning axis AX that extends in a vertical direction or the upper and lower direction.

The turning shaft sections 24 of the hub bearing assembly 2 are coupled to the unit support member 6 through the interposition of a rotatable support member 26 therebetween. A tapered roller bearing is used as the rotatable support member 26 in the instant embodiment. Rotatable support of the hub bearing 8 on the vehicle body about the axis AX of the turning shaft sections 24 will thus be provided through the unit support member 6.

A kingpin angle in a typical vehicle is selected to be between 10 and 20 degrees with a view to improving the straight-line stability of the vehicle during driving. Besides a kingpin axis, the hub unit 1 with a steering function in the instant embodiment includes the turning shaft sections 24 with which steering of the hub unit 1 relative to the unit support member 6 takes place about the axis AX of the turning shaft sections 24 by a subtle angle (approximately within ±5°). Nevertheless, such a subtle angle is one of the non-limiting examples; the hub unit with a steering function may even allow a relatively large angle to be taken independently for an individual left or right wheel, such as, for example, approximately within 10 to 20° depending on the desired vehicle control.

As depicted in Fig. 5, the hub bearing assembly 2 further includes an arm section 28 projecting from the outer ring 22 rearward of the vehicle. The hub bearing 8, the outer ring 22, the turning shaft sections 24, and the arm section 28 cooperate together to form the hub bearing assembly 2.

The arm section 28 in the instant embodiment is formed in one piece with the outer ring 22. Nevertheless, the arm section 28 may be formed as a distinct piece from the outer ring 22 and coupled thereto by means of force-fitting, fastening using a bolt, welding, or crimping, for example. The aforementioned steering actuator 4 is coupled to the arm section 28. The discussion on the details of a coupling structure between the arm section 28 and the steering actuator 4 will be saved for later.

Turning to Fig. 4, the steering actuator 4 is located on a vehicle body-side of the unit support member 6 and causes the hub bearing 8 to rotate about the axis AX of the turning shaft sections 24. As depicted in Fig. 5, the steering actuator 4 includes a motor 38, a speed reducer 40, and a linear drive mechanism 42. Accordingly, the drive power from the motor 38 is subjected to speed reduction at the speed reducer 40 and, then, to rotary-to-linear motion conversion at the linear drive mechanism 42, before being output therefrom. However, the speed reducer 40 may be omitted.

The linear drive mechanism 42 forms an extensible and retractable assembly capable of providing extension or retraction in a direction perpendicular to the axis AX of the turning shaft sections 24. A trapezoidal lead screw is used as the linear drive mechanism 42 in the instant embodiment. A trapezoidal lead screw is one of the non-limiting examples; the linear drive mechanism 42 may be, for instance, a ball screw or a rack and pinion mechanism.

As depicted in Fig. 1, a free end (i.e., an output) of the extensible and retractable assembly 42 of the steering actuator 4 is coupled through a joint assembly 44 to a free end of the arm section 28 of the hub bearing assembly 2. Generally, though not shown in the figures, a boot is attached around the joint assembly for protection from water and dust.

The joint assembly 44 provides two or more directions of freedom. The joint assembly 44 in the instant embodiment includes a first joint 70 and a second joint 72, with the two joints 70, 72 being arranged in series. More specifically, the first joint 70 is arranged on the free end of the extensible and retractable assembly 42 of the steering actuator 4 and is coupled to the second joint 72. The second joint 72, in turn, is coupled to the arm section 28.

Ball joints are employed as the first and second joints 70, 72 in the instant embodiment. Nevertheless, a ball joint is one of the non-limiting examples of such a joint; for example, it may, instead, be a cross joint (i.e., a flexible universal joint) formed of a combination of two perpendicular links. In this context, the joint assembly 44 may include a single joint or three or more joints, provided that two or more directions of angular freedom are provided thereby. Also, when the joint assembly 44 includes a plurality of joints, a ball joint or a cross joint may be used as at least one of the joints. Moreover, a combination of a ball joint and a cross joint may be employed.

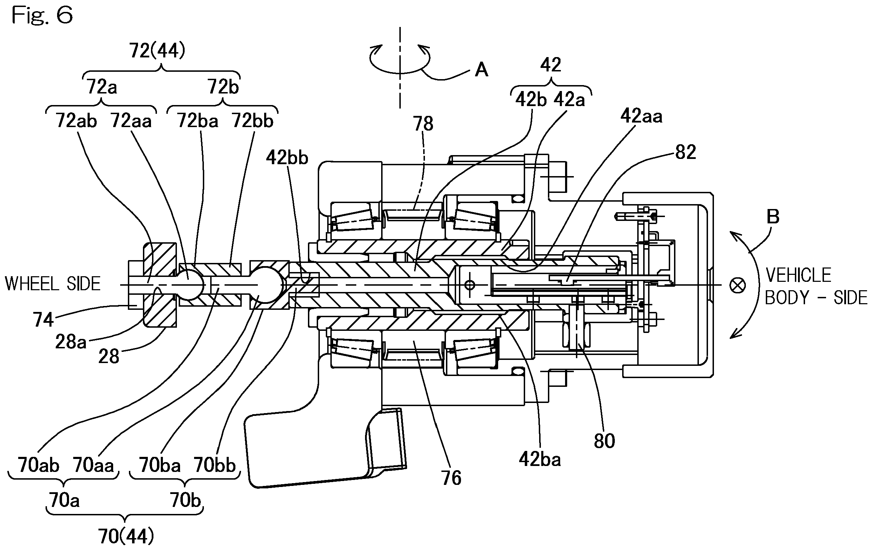

Each of the ball joints 70, 72 in this context has a general structure that is similar to those principally used for opposite tie rod ends in a steering assembly of a vehicle. As depicted in Fig. 6, each of the ball joints 70, 72 is formed of an inner capsule member 70a, 72a that assumes a spherical body and an outer capsule member 70b, 72b surrounding the inner capsule member 70a, 72a. The inner capsule member 70a, 72a and the outer capsule member 70b, 72b are coupled with little backlash by means of crimping, casting, etc. Enclosed inside is grease or a resin sheet for the purpose of reducing wear to facilitate a smooth movement. Further, a boot, etc. is used to cover an open area in order to prevent grease egress and ingress of foreign matters. These features are applicable in an analogous manner to the instant embodiment as well.

More specifically, each of the inner capsule members 70a, 72a includes a spherical body part 70aa, 72aa, and a shaft part 70ab, 72ab extending from the spherical body part 70aa, 72aa towards a wheel side. The shaft part 70ab, 72ab has an outer peripheral surface formed thereon with a male threading.

The outer capsule member 70b of the first ball joint 70 includes a retaining part 70ba that retains the spherical body part 70aa, and a shaft part 70bb extending from the retaining part 70ba towards a vehicle body-side. The shaft part 70bb has an outer peripheral surface formed thereon with a male threading. Meanwhile, the outer capsule member 72b of the second ball joint 72 includes a retaining part 72ba that retains the spherical body part 72aa, and a cylindrical part 72bb extending from the retaining part 72ba towards a vehicle body-side. The cylindrical part 72bb has an inner surface formed therein with a female threading.

While the shaft part 70ab, 72ab of each of the inner capsule members 70a, 72a in the instant embodiment extends from the spherical body part 70aa, 72aa towards a wheel side, the shaft part 70ab, 72ab may, alternatively, extend from the spherical body part 70aa, 72aa towards a vehicle body-side. In this scenario, the outer capsule member 70b of the first ball joint 70 will include a retaining part and a cylindrical part, while the outer capsule member 72b of the second ball joint 72 will include a retaining part and a shaft part 70bb.

Turning to Fig. 5, the two ball joints 70, 72 pivot about axes which are parallel to the axis AX of the turning shaft sections 24 (or, in the instant embodiment, about vertical axes.) By means of such a coupling, between the output of the steering actuator 4 and the arm section 28, which is provided through the joint assembly 44 that includes the two ball joints 70, 72, the extension or retraction movement (i.e., a linear motion) provided by the actuator 4 is converted to a rotary motion about the turning axis and causes the turning of the hub bearing assembly 2. This allows a difference in trajectory between the actuator-side linear motion and the arm-side arcuate motion to be absorbed during the transmission of a mechanical power and can thereby promote smooth steering of the hub bearing assembly. While the actuator 4 and the arm section 28 are located on a rear side of the axle in the instant embodiment, they may, alternatively, be located on a front side thereof.

Fig. 6 shows a cross sectional view of the coupling structure between the free end of the extensible and retractable assembly 42 of the actuator 4 and the free end of the arm section 28 when seen from the rear of the vehicle. The linear drive mechanism (i.e., the extensible and retractable assembly) 42 of the actuator 4 in the instant embodiment is formed by a trapezoidal lead screw, and includes a nut component 42a and a threaded shaft 42b in threaded engagement therewith. More specifically, a threading 42ba on the outer peripheral surface of the threaded shaft 42b is in threaded engagement with a threaded hole 42aa defined by the inner peripheral surface of the nut component 42a.

A pulley 76 is fitted to the outer peripheral surface of the nut component 42a of the actuator 4, and a power transmission member 78 such as a timing belt is passed around the pulley 76. Rotations from the motor 38 of the steering actuator 4 are transmitted through the power transmission member 78 to the nut component 42a of the linear drive mechanism (i.e., the trapezoidal lead screw) 42 to drive the nut component 42a into rotation.

As the nut component 42a rotates, the threaded shaft 42b in threaded engagement therewith is linearly displaced in a left or right direction of the vehicle. A rotation stopper 80 is provided at the back (i.e., on a vehicle body-side) of the threaded shaft 42b of the linear drive mechanism (i.e., the trapezoidal lead screw) 42 to restrict the rotation of the threaded shaft 42b. Further, a threaded shaft position sensor 82 is provided at a location rearward of the threaded shaft 42b and is configured such that the extended or retracted position of the actuator 4 can be monitored or controlled through feedback.

The threaded shaft 42b has a free end which projects forwards (i.e., on a wheel side) of the actuator 4 and to which the outer capsule member 70b of the first joint 70 is fixed. In the instant embodiment, the coupling therebetween is established by fastening the male threading provided on the shaft part 70bb of the outer capsule member 70b of the first joint 70 to a female threading 42bb provided in the free end of the threaded shaft 42b.

Also, the inner capsule member 70a of the first joint 70 is fixed to the outer capsule member 72b of the second joint 72. In the instant embodiment, the coupling therebetween is established by fastening the male threading provided on the shaft part 70ab of the inner capsule member 70a of the first joint 70 to the female threading provided in the cylindrical part 72bb of the outer capsule member 72b of the second joint 72.

Further, the inner capsule member 72a of the second joint 72 is fixed to the arm section 28. In the instant embodiment, the coupling therebetween is established by inserting the shaft part 72ab of the inner capsule member 72a of the second joint 72 through a through hole 28a of the arm section 28 and fastening a nut 74 onto the male threading provided on the shaft part 72ab.

The ball joints 70, 72 provide two or more directions of angular freedom such that they are pivotable about an axis parallel to the axis AX of the turning shaft sections 24 (in a direction indicated with an arrow A in Fig. 6) and are also pivotable about an axis perpendicular to the axis AX of the turning shaft sections 24 (in a direction indicated with an arrow B in Fig. 6). This helps absorb imprecisions resulting from a possible misalignment of the actuator 4 in regard to the direction of extension or retraction thereof due to, for example, the precision with which the actuator 4 is installed, while at the same time establishing a coupling between the actuator 4 and the arm section 28, and can thereby promote smooth steering.

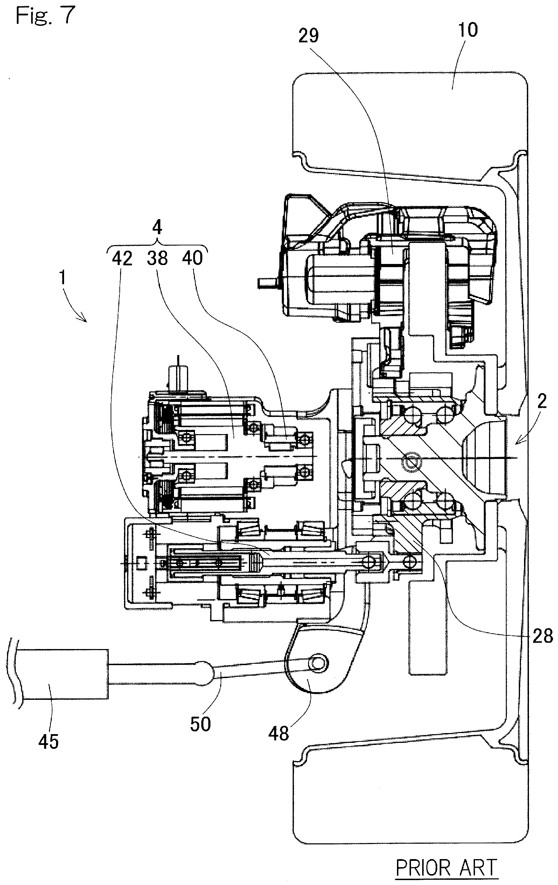

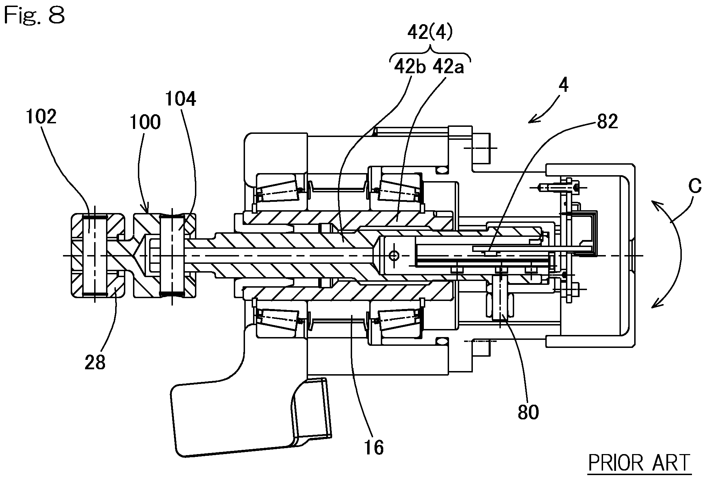

Figs. 7 and 8 illustrate a coupling structure using a conventional linkage. In the conventional coupling structure, an extensible and retractable assembly 42 of an actuator 4 is coupled to an arm section 28 through a joint assembly 100 that includes two link pins 102, 104. Such a conventional coupling structure does not allow any pivoting about an axis perpendicular to a turning shaft section 24 (according to an arrow C in Fig. 8). Thus, for absorbing purposes, it was necessary to create a wide margin of gap for the fitting of a link. Turning to Fig. 6, the instant embodiment obviates the need to create such a widened gap and can thereby reduce backlash in the steering direction to a minimum. In addition, the coupling using the two ball joints 70, 72 can absorb a possible discrepancy between the position to be taken by the actuator 4 upon installation and the position to be taken for coupling to the arm section 28, through the relative pivoting of the two ball joints 70, 72, while at the same time establishing a coupling between the actuator 4 and the arm section 28.

The steering actuator 4 is controlled by a control device 60. The control device 60 is, for example, formed by a program and a processing unit with which the program is to be implemented. This is a non-limiting example of the control device 60; it may, instead, be formed by an electrical circuit or an electronic circuit. The hub unit 1 with a steering function and the control device 60 form a steering system SY. The control device 60 includes a superordinate control unit 62, a controller 64, and a power supply unit 66.

The superordinate control unit 62 outputs a steering angle command signal S 1 for a left or right wheel as a function of the conditions of the vehicle. The controller 64 receives the command signal S 1 from the superordinate control unit 62 and outputs a motor current command signal S2. The power supply unit 66 outputs a current E1 as a function of the motor current command signal S2 to drive the steering actuator 4. By using such a motor drive current E1 that corresponds to the command signal S2 as an output to the motor 38 of a left or right steering actuator 4, granular changes are made as desired to the angle of the hub bearing assembly 2 relative to the unit support member 6 in such a manner to improve dynamic performance and fuel economy.

The hub unit 1 with a steering function in the instant embodiment represents a hub unit with an auxiliary steering function, as it is furnished with a functionality to perform auxiliary steering in a supplementary manner to steering provided by a steering assembly 45 shown in Fig. 5. The hub unit 1 with a steering function is provided with a steering assembly coupling section 48 to which the steering assembly 45 is to be attached, and the steering assembly 45 will be coupled to this steering assembly coupling section 48 via a tie rod 50. The steering assembly 45 is, for example, that of a rack and pinion design. A rack and pinion design is one of the non-limiting examples; the steering assembly 45 may, instead, be that of a different design.

In the instant embodiment, the steering assembly coupling section 48 is located on the unit support member 6. The unit support member 6 is provided in one piece with the knuckle of the suspension system. While the suspension system in the instant embodiment is represented by a strut suspension mechanism in which a shock absorber (not shown) is to be directly fixed to the unit support member (or knuckle) 6, the suspension system may, instead, be represented by a different suspension mechanism such as that of a double wishbone design or a multilink design.

As seen thus far, the hub unit 1 with a steering function in the instant embodiment presents a hub unit with an auxiliary steering function, which can help a driver control the steering angle of a wheel through his or her action on a steering wheel (or the steering assembly 45). Nevertheless, a hub unit with an auxiliary steering function is one of the non-limiting applications; the hub unit 1 with a steering function according to the present invention can also be used as a primary steering device. In this scenario, the steering assembly 45, the tie rod 50, and the steering assembly coupling section 48 are omitted. In addition, a coupling position of the tie rod 50 may be forward of the axle (i.e., forward offsetting) or rearward of the axle (i.e., rearward offsetting).

According to the above-presented configuration, the turning shaft sections 24 are provided in the hub unit 1 separately from an axis BX of rotation, so as to rotatably retain the hub bearing assembly 2 about the turning shaft sections 24. Moreover, the rotation of the hub bearing assembly 2 about the axis AX of the turning shaft sections 24 can be effected using the steering actuator 4 located in the hub unit 1. This presents a simple design with which the toe angle of a wheel 10, when attached to the hub unit 1, can be changed to a desired level.

Furthermore, angular changes can be made as desired to a left or right wheel independently of the other as a function of the conditions of travel of the vehicle, thereby making it possible to improve the dynamic performance of the vehicle and achieve stable driving thereof. An improved fuel economy can even be achieved by selecting appropriate wheel angles.

According to the above-presented configuration, the free end of the extensible and retractable assembly 42 of the steering actuator 4 is coupled to the free end of the arm section 28 through the joint assembly 44 which can pivot about an axis parallel to the axis AX of the turning shaft sections 24 (i.e., about a vertical axis), and also, can pivot about an axis perpendicular to the axis AX of the turning shaft sections 24 (i.e., about the axis BX of rotation of a wheel). This allows a difference in trajectory between the actuator-side linear motion and the arm-side arcuate motion or a possible imprecision in the installation of the actuator to be absorbed with no increase in backlash in the coupling assembly, while, at the same time, being thereby able to promote smooth steering of the hub bearing assembly 2.

With less backlash in the coupling assembly, a tire is prevented from coming out of alignment, and also, more accurate steering angle control can be implemented, thus being able to contribute to the improved dynamics and stability of the vehicle. Further, a wider tolerance range can be provided with respect to a possible imprecision in the installation of the actuator 4, thus being able to loosen machining accuracy and assembly accuracy requirements and thereby reduce cost and step number.

The foregoing is one or more of the non-limiting embodiments of the present invention; various additions, changes, or omissions can be made therein without departing from the principle of the present invention. For example, while the steering actuator 4 in the above-described embodiment(s) is composed of the motor 38, the speed reducer 40, and the linear drive mechanism 42, the steering actuator 4 may, instead, be formed of a linear actuator. The application of the hub unit with a steering function according to the present invention is not limited to use in conjunction with a front wheel; it can also be used in a rear wheel steering device which steers a rear wheel as a function of the operation of the steering wheel by a driver, etc. Hence, these are also encompassed within the scope of the present invention.

### Reference Symbols

- 1: hub unit with a steering function
- 2: hub bearing assembly
- 4: steering actuator
- 6: unit support member
- 8: hub bearing
- 10: wheel
- 24: turning shaft section
- 28: arm section
- 42: extensible and retractable assembly (linear drive mechanism, trapezoidal lead screw)
- 44: joint assembly
- 62: superordinate control unit
- 64: controller
- 66: power supply unit
- 70: first joint (ball joint)
- 72: second joint (ball joint)
- AX: axis of turning shaft section
- SY: steering system

## Claims

1. A hub unit with a steering function, the unit comprising:
a hub bearing configured to rotatably support a wheel;
an outer ring located at an outer peripheral surface of an outer race of the hub bearing;
a cylindrical turning shaft section extending from an external side of the outer ring thereabove and thereunder;
a steering actuator configured to cause the hub bearing to rotate about an axis of the turning shaft section;
a unit support member configured to rotatably support the hub bearing about the axis of the turning shaft section on a vehicle body; and
an arm section projecting from the outer ring forward or rearward of a vehicle, the steering actuator being coupled to the arm section, wherein
the steering actuator includes an extensible and retractable assembly capable of providing extension or retraction in a direction perpendicular to the axis of the turning shaft section, and
the extensible and retractable assembly is coupled to the arm section through a joint assembly providing two or more directions of freedom.

2. The hub unit with a steering function as claimed in claim 1, wherein the joint assembly includes a plurality of joints arranged in series.

3. The hub unit with a steering function as claimed in claim 2, wherein the plurality of joints comprise at least one ball joint.

4. The hub unit with a steering function as claimed in claim 2 or 3, wherein the plurality of joints comprise at least one cross joint.

5. A steering system comprising:
a hub unit with a steering function as claimed in any one of claims 1 to 4;
a controller configured to receive a command signal from a superordinate control unit and output a motor current command signal; and
a power supply unit configured to output a current as a function of the motor current command signal to drive the steering actuator.

6. A vehicle comprising left and right front wheels equipped with a hub unit with a steering mechanism as claimed in any one of claims 1 to 4 or a steering system as claimed in claim 5.

7. A vehicle comprising left and right rear wheels equipped with a hub unit with a steering mechanism as claimed in any one of claims 1 to 4 or a steering system as claimed in claim 5.
